# EUROPÄISCHE PATENTSCHRIFT

(11) **EP 4 530 924 B1**
(45) Veröffentlichungstag und Bekanntmachung des Hinweises auf die Patenterteilung: **22.04.2026**
(21) Anmeldenummer: 23200152.9
(22) Anmeldetag: 27.09.2023
(51) Int. Cl.: G06K 7/10, H04L 67/50, H04L 67/52, G06K 7/00

(54) **VERFAHREN ZUM BETRIEB MEHRERER RFID-LESEGERÄTE UND STEUERUNGS- UND ÜBERWACHUNGSEINHEIT FÜR RFID-LESEGERÄTE**
METHOD FOR OPERATING A PLURALITY OF RFID READERS AND CONTROL AND MONITORING UNIT FOR RFID READERS
PROCÉDÉ DE FONCTIONNEMENT DE PLUSIEURS LECTEURS RFID ET UNITÉ DE COMMANDE ET DE SURVEILLANCE POUR LECTEURS RFID

(43) Veröffentlichungstag der Anmeldung: 02.04.2025
(73) Patentinhaber: Siemens Aktiengesellschaft, 80333 München (DE)
(72) Erfinder: Radin-Macukat, Marjan, 90765 Fürth (DE); Enßlin, Friedrich, 90556 Cadolzburg (DE); Harrer, Michael, 91325 Adelsdorf (DE)
(74) Vertreter: Siemens Patent Attorneys

(56) Entgegenhaltungen:
- US-A1- 2006 022 800
- US-A1- 2009 256 683
- US-A1- 2010 176 926

## Beschreibung

Die vorliegende Erfindung betrifft ein Verfahren zum Betrieb mehrerer RFID-Lesegeräte, insbesondere UHF-RFID-Lesegeräte, und Steuerungs- und Überwachungseinheit für RFID-Lesegeräte zur Durchführung eines solchen Verfahrens

Funk-Transponder können beispielsweise RFID-Tags (radiofrequency identification) sein, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits kann dieses elektro-magnetische Wechselfeld zur Energieversorgung insbesondere passiv betriebener RFID-Tags dienen, die keine eigene Energiequelle aufweisen. Andererseits kann das elektro-magnetische Wechselfeld durch RFID-Tags zur Übermittlung eines Antwortsignals moduliert werden, beispielsweise durch Lastmodulation oder Variierung ihrer Antennenimpedanz.

Funk-Transponder-Systeme für industrielle Automatisierungssysteme müssen besonderen Anforderungen hinsichtlich zuverlässiger Datenübermittlung, Authentizität übermittelter Daten und Unempfindlichkeit gegenüber Störsendern genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte oder manipulierte Funk-Transponder-Systeme zu schwerwiegenden Auswirkungen führen, im ungünstigsten Fall zu einem Stillstand eines Automatisierungssystems.

Aus EP 3 291 488 B1 ist ein Verfahren zur Konfiguration eines Kommunikationsmoduls zumindest eines RFID-Lesegeräts bekannt, das über das Kommunikationsmodul an ein Kommunikationsnetz angebunden ist. Das zumindest eine RFID-Lesegerät wird über eine serielle Schnittstelle an das Kommunikationsmodul angeschlossen. In einer Konfigurationsspeichereinheit des Kommunikationsmoduls werden zumindest Kommunikationsnetzadressinformationen und Gerätetypinformationen umfassende Konfigurationsinformationen gespeichert. Die in der Konfigurationsspeichereinheit des Kommunikationsmoduls gespeicherten Konfigurationsinformationen werden über die serielle Schnittstelle an das zumindest eine RFID-Lesegerät übermittelt und dort in einem vorgegebenen Konfigurationsspeicherbereich gespeichert. Die im vorgegebenen Konfigurationsspeicherbereich des RFID-Lesegeräts gespeicherten Konfigurationsinformationen werden bei einem Gerätestart eines anstelle des Kommunikationsmoduls verwendeten Ersatz-Kommunikationsmoduls nach einer erfolgreichen Gültigkeitsprüfung zur Konfiguration des Ersatz-Kommunikationsgeräts geladen.

In EP 3 290 948 B1 ist ein Positionserfassungssensor eines Positionserfassungssystems beschrieben, der einen ersten und einen zweiten Funk-Transponder umfasst, die jeweils eine mit einer Antenne verbundene Sende- und Empfangseinheit und eine Speichereinheit zur persistenten Datenspeicherung aufweisen. Der erste Funk-Transponder weist eine Energieversorgungsquelle auf und ist wahlweise in einen Ruhezustand mit reduziertem Energieverbrauch und in einen aktiven Betriebszustand mit vollständigem Funktionsumfang versetzbar. Im aktiven Betriebszustand erfolgt ein Aufbau zumindest einer Funk-Verbindung zur Positionserfassung zu zumindest einem ersten Funk-Transponder-Lesegerät. Der induktiv durch ein Funk-Transponder-Lesegerät mit Energie versorgbare zweite Funk-Transponder ist dazu ausgestaltet und eingerichtet, bei Eintritt in einen Erfassungsbereich eines zweiten Funk-Transponder-Lesegerätes den ersten Funk-Transponder aus dem Ruhezustand in den aktiven Betriebszustand zu versetzen oder über das zweite Funk-Transponder-Lesegerät eine dem zweiten Funk-Transponder zugeordnete Positionsinformation an einen Server des Positionserfassungssystems zu übermitteln.

Aus US 2006/022800 A1 und US 2009/256683 A1 ist jeweils ein Verfahren zum Betrieb mehrerer RFID-Lesegeräte bekannt, bei dem die RFID-Lesegeräte über ein Kommunikationsnetz (NET) zeitsynchronisiert werden. Dabei werden RFID-Lesegeräte ermittelt, deren Erfassungsbereiche sich zumindest teilweise überschneiden. US 2009/256683 A1 ist in der Präambel von Anspruch 1 reflektiert.

UHF-RFID-Systeme, die im Frequenzbereich von 865 MHz bis 928 MHz arbeiten, haben im Vergleich zu HF-RFID-Systemen, die bei 13,56 MHz arbeiten, einen größeren Abdeckungsbereich. Falls sich mehrere RFID-Lesegeräte bzw. mehrere Antennen von RFID-Lesegeräten in räumlicher Nähe zueinander befinden, müssen sowohl Positionierung als Ausrichtung der Antennen umso sorgfältiger geplant werden, damit eine gegenseitige Störung insbesondere bei gleichzeitigen Lesevorgängen vermieden werden kann. Dieses Problem kann durch eine Synchronisierung der Lesevorgänge von RFID-Lesegeräten gelöst werden, beispielsweise mittels einer die RFID-Lesegeräte steuernden speicherprogrammierbaren Steuerung oder mittels eines Master-RFID-Lesegeräts. Dabei erfolgt eine Synchronisierung jedoch nur auf Geräteebene, und nicht etwa pro Antenne. Außerdem ist die Synchronisierung nur so lange gewährleistet, wie die jeweilige speicherprogrammierbaren Steuerung oder das jeweilige Master-RFID-Lesegeräts ungestört verfügbar sind. Alternativ zur Synchronisierung können RFID-Lesegeräte grundsätzlich mittels CSMA-Verfahren vor Benutzung eines Funkkanals prüfen, ob der Funkkanal bereits durch andere Teilnehmer belegt ist. Allerdings können Kollisionen bei einem Zugriff auf einen Funkkanal damit lediglich erkannt, aber nicht vermieden werden. Zudem verursacht eine zusätzliche Prüfung auf eine bestehende Funkkanalbelegung regelmäßig Performance-Einbußen.

Der vorliegenden Erfindung liegt daher die Aufgabe zugrunde, ein zuverlässiges und performantes Verfahren zum Betrieb mehrerer RFID-Lesegeräte, an die jeweils mehrere Antennen angeschlossen sind, zu schaffen und eine geeignete Implementierung des Verfahrens anzugeben.

Diese Aufgabe wird erfindungsgemäß durch ein Verfahren mit den in Patentanspruch 1 angegebenen Merkmalen und durch ein Steuerungs- und Überwachungseinheit für RFID-Lesegeräte mit den in Patentanspruch 9 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb mehrerer RFID-Lesegeräte, an die jeweils mehrere Antennen angeschlossen sind, werden die RFID-Lesegeräte, insbesondere UHF-RFID-Lesegeräte, über ein Kommunikationsnetz zeitsynchronisiert. Im Kommunikationsnetz wird vorzugsweise ein Zeitmultiplexverfahren angewendet, insbesondere Time Division Multiple Access (TDMA). Die RFID-Lesegeräte umfassen vorteilhafterweise jeweils ein Kommunikationsmodul, das durch einen im Kommunikationsnetz bereitgestellten Zeitsynchronisations-Server, insbesondere entsprechend Network Time Protocol (NTP) oder Precision Time Protocol (PTP), synchronisiert wird.

Erfindungsgemäß werden unterschiedlichen RFID-Lesegeräten bzw. demselben RFID-Lesegerät zugeordnete Antennen ermittelt, deren Erfassungsbereiche sich zumindest teilweise überschneiden. Eine teilweise Überschneidung der Erfassungsbereiche mehrerer Antennen liegt insbesondere dann vor, wenn Signale von unterschiedlichen Antennen an zumindest einer Position mit jeweils über einem vorgegebenen Empfangsfeldstärke-Schwellwert empfangen werden. Die Antennen mit den sich zumindest teilweise überschneidenden Erfassungsbereichen werden während eines Listen-Before-Talk-Betriebsmodus der Antennen bzw. der RFID-Lesegeräte ermittelt.

Die ermittelten Antennen mit den sich zumindest teilweise überschneidenden Erfassungsbereichen werden erfindungsgemäß an einer graphischen Benutzerschnittstelle einer über das Kommunikationsnetz mit den RFID-Lesegeräten verbundenen Steuerungs- und Überwachungseinheit als miteinander in Konflikt stehend gekennzeichnet. Mittels der Steuerungs- und Überwachungseinheit wird vorteilhafterweise ein Konfigurationstool für die RFID-Lesegeräte bereitgestellt.

Für eine Nutzung jeder Antenne am jeweiligen RFID-Lesegerät zum Auslesen bzw. Beschreiben von RFID-Transpondern wird jeweils zumindest ein sich zyklisch wiederholendes Zeitfenster reserviert, das der jeweiligen Antenne zugeordnet wird. Die sich zyklisch wiederholenden Zeitfenster werden für die Antennen der RFID-Lesegeräte vorzugsweise mittels der Steuerungs- und Überwachungseinheit reserviert.

Die Zeitfenster werden erfindungsgemäß mit Zeitinformationen, insbesondere NTP- oder PTP-Zeitstempel, innerhalb des Kommunikationsnetzes synchronisiert. Außerdem wird eine Zuordnung der miteinander in Konflikt stehenden Antennen zum selben Zeitfenster blockiert. Auf diese Weise kann eine zuverlässige und performante Synchronisierung der RFID-Lesegeräte und eine Zugriffskonfliktvermeidung auf Antennenebene realisiert werden. Insbesondere ist die vorliegende Erfindung vollständig robust gegenüber einem Ausfall einer bisher üblichen speicherprogrammierbaren Steuerung oder eines alternativ zur Synchronisierung verwendeten Master-RFID-Lesegeräts. Im Gegensatz dazu werden in Kommunikationsnetzen regelmäßig ohnehin redundante Zeitsynchronisations-Server verwendet.

Entsprechend einer besonders bevorzugten Ausgestaltung der vorliegenden Erfindung werden die Antennen der RFID-Lesegeräte an der graphischen Benutzerschnittstelle der Steuerungs- und Überwachungseinheit gruppiert nach dem jeweiligen RFID-Lesegerät in einer Konflikt-Matrix visualisiert. Dabei ist jeder Antenne jeweils eine Spalte und eine Zeile innerhalb der Konflikt-Matrix zugeordnet. Die miteinander in Konflikt stehenden Antennen werden innerhalb der Konflikt-Matrix vorteilhafterweise graphisch hervorgehoben dargestellt. Dies ermöglicht eine besonders einfache und wirksame Kontrolle möglicher Konfliktfälle.

Analog dazu wird die Zuordnung der sich zyklisch wiederholenden Zeitfenster zu den Antennen der RFID-Lesegeräte vorzugsweise an der graphischen Benutzerschnittstelle der Steuerungs- und Überwachungseinheit gruppiert nach dem jeweiligen RFID-Lesegerät in einer Zeitfenster-Antennen-Matrix visualisiert. Dabei ist jedem Zeitfenster jeweils eine Spalte bzw. Zeile innerhalb der Zeitfenster-Antennen-Matrix zugeordnet, während jeder Antenne dementsprechend jeweils eine Zeile bzw. Spalte innerhalb der Zeitfenster-Antennen-Matrix zugeordnet ist. Die miteinander in Konflikt stehenden Antennen können damit innerhalb der Zeitfenster-Antennen-Matrix graphisch hervorgehoben dargestellt werden, so dass eine einfache Kontrolle hinsichtlich kritischer Zeitfensterzuordnungen ermöglicht wird.

Die erfindungsgemäße Steuerungs- und Überwachungseinheit für RFID-Lesegeräte ist zur Durchführung eines Verfahrens nach vorangehenden Ausführungen vorgesehen und umfasst eine graphische Benutzerschnittstelle. Außerdem ist die Steuerungs- und Überwachungseinheit dafür eingerichtet, unterschiedlichen RFID-Lesegeräten bzw. demselben RFID-Lesegerät zugeordnete Antennen zu ermitteln, deren Erfassungsbereiche sich zumindest teilweise überschneiden, und die ermittelten Antennen mit den sich zumindest teilweise überschneidenden Erfassungsbereichen an der graphischen Benutzerschnittstelle als miteinander in Konflikt stehend zu kennzeichnen.

Darüber hinaus ist die Steuerungs- und Überwachungseinheit dafür eingerichtet, für eine Nutzung jeder Antenne am jeweiligen RFID-Lesegerät zum Auslesen bzw. Beschreiben von RFID-Transpondern jeweils zumindest ein sich zyklisch wiederholendes Zeitfenster zu reservieren und der jeweiligen Antenne zuzuordnen. Schließlich ist die Steuerungs- und Überwachungseinheit dafür eingerichtet, eine Zuordnung der miteinander in Konflikt stehenden Antennen zum selben Zeitfenster zu blockieren.

Die vorliegende Erfindung wird nachfolgend an einem Ausführungsbeispiel anhand der Zeichnung näher erläutert. Es zeigt
- Figur 1: eine Anordnung mit mehreren RFID-Lesegeräten, an die jeweils mehrere Antennen angeschlossen sind, und einer über ein Kommunikationsnetz mit den RFID-Lesegeräten verbundenen Steuerungs- und Überwachungseinheit,
- Figur 2: eine an einer graphischen Benutzerschnittstelle der Steuerungs- und Überwachungseinheit visualisierte Konflikt-Matrix zur Darstellung sich potentiell gegenseitig störender Antennen,
- Figur 3: eine an der graphischen Benutzerschnittstelle der Steuerungs- und Überwachungseinheit visualisierte Zeitfenster-Antennen-Matrix zur Kontrolle einer Zuordnung von Zeitfenstern zur Nutzung der Antennen.

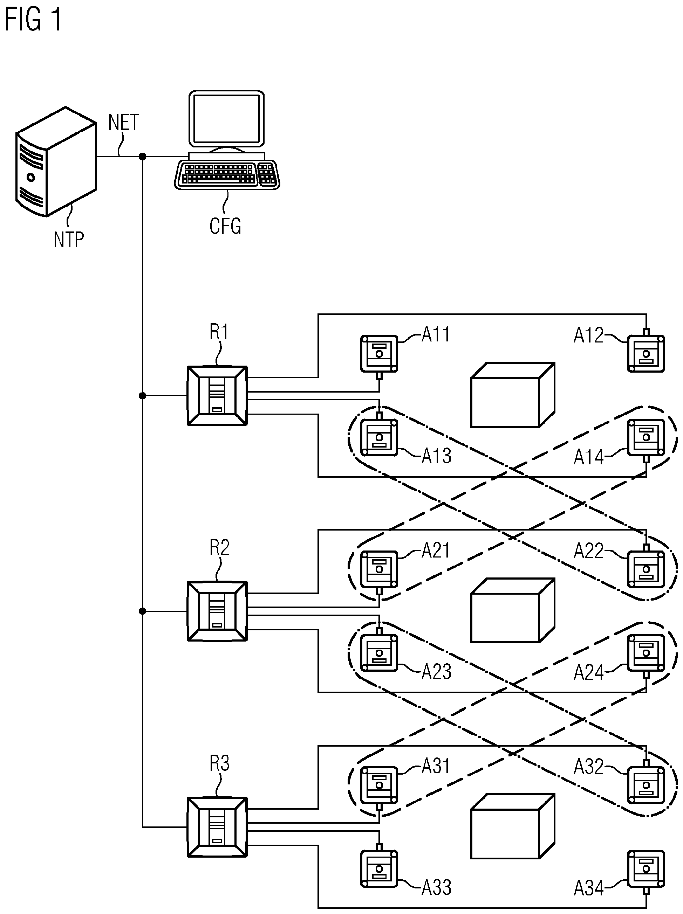

Die in Figur 1 dargestellte Anordnung umfasst mehrere über ein Kommunikationsnetz NET miteinander verbundener RFID-Lesegeräte R1-R3, an die jeweils mehrere Antennen A11-A14, A21-A24, A31-A34 angeschlossen sind. Im Kommunikationsnetz NET wird ein Zeitmultiplexverfahren, beispielsweise Time Division Multiple Access (TDMA), angewendet, wobei die RFID-Lesegeräte R1-R3 jeweils ein Kommunikationsmodul umfassen, das durch einen im Kommunikationsnetz NET vorgesehenen Zeitsynchronisations-Server NTP synchronisiert wird. Auf diese Weise werden die RFID-Lesegeräte zeitsynchronisiert. Dies kann insbesondere entsprechend Network Time Protocol (NTP) oder Precision Time Protocol (PTP) erfolgen.

Darüber hinaus ist für die RFID-Lesegeräte R1-R3 eine Steuerungs- und Überwachungseinheit CFG vorgesehen, die über das Kommunikationsnetz NET mit den RFID-Lesegeräten R1-R3 verbunden ist. Mittels der Steuerungs- und Überwachungseinheit CFG wird insbesondere ein Konfigurationstool für die RFID-Lesegeräte R1-R3 bereitgestellt.

Zur Vermeidung einer störenden bzw. zu Funktionsproblemen führenden gegenseitigen Beeinflussung der Antennen A11-A14, A21-A24, A31-A34 bei einem Auslesen bzw. Beschreiben von RFID-Transpondern werden unterschiedlichen RFID-Lesegeräten R1-R3 bzw. demselben RFID-Lesegerät R1-R3 zugeordnete Antennen A11-A14, A21-A24, A31-A34 ermittelt, deren Erfassungsbereiche sich zumindest teilweise überschneiden. Derartige nachteilige Beeinflussungen ergeben sich verstärkt, wenn die RFID-Lesegeräte R1-R3 UHF-RFID-Lesegeräte sind. Eine teilweise Überschneidung der Erfassungsbereiche mehrerer Antennen liegt insbesondere dann vor, wenn Signale von unterschiedlichen Antennen A11-A14, A21-A24, A31-A34 an zumindest einer Position mit jeweils über einem vorgegebenen Empfangsfeldstärke-Schwellwert empfangen werden.

Wie in Figur 1 anhand gestrichelter bzw. gepunkteter Linien um Paare sich ungünstig gegenseitig beeinflussender Antennen angedeutet, überschneiden sich im vorliegenden Ausführungsbeispiel die Erfassungsbereiche der Antennen A13 und A22. Weitere Überschneidungen bestehen zwischen den Antennen A14 und A21, zwischen den Antennen A23 und A32 sowie zwischen den Antennen A24 und A31. Derartige Überschneidungen können dazu führen, dass RFID-Transponder mittels der betroffenen Antennen A13/A22, A14/A21, A23/A32, A24/A31 nicht korrekt gelesen werden können. Die Antennen A13/A22, A14/A21, A23/A32, A24/A31 mit den sich zumindest teilweise überschneidenden Erfassungsbereichen können beispielsweise während eines Listen-Before-Talk-Betriebsmodus der Antennen A11-A14, A21-A24, A31-A34 bzw. der RFID-Lesegeräte R1-R3 ermittelt werden.

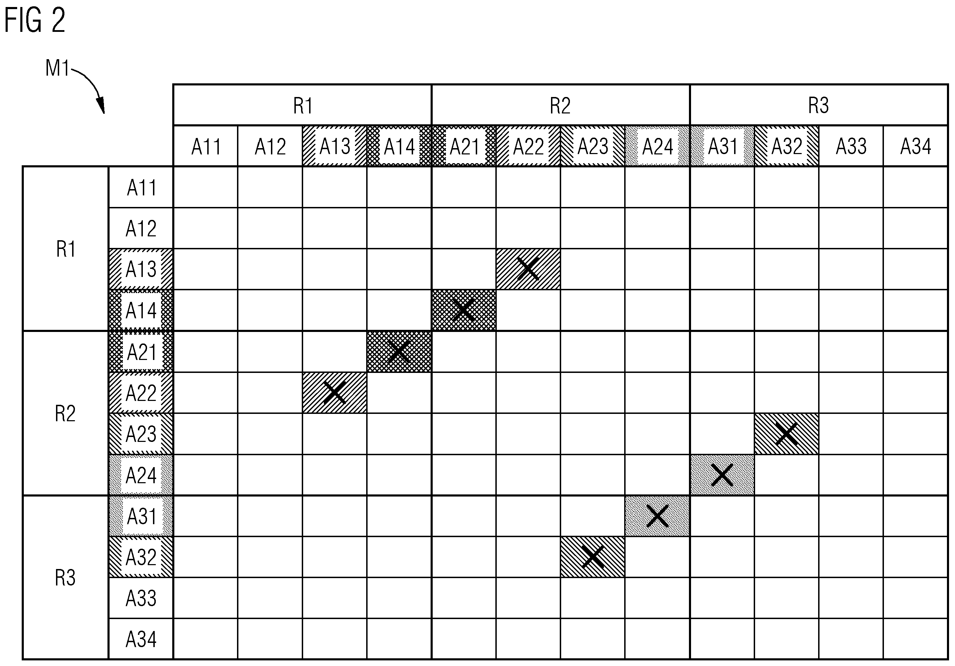

Entsprechend Figur 2 werden die ermittelten Antennen A13/A22, A14/A21, A23/A32, A24/A31 mit den sich zumindest teilweise überschneidenden Erfassungsbereichen an einer graphischen Benutzerschnittstelle der Steuerungs- und Überwachungseinheit CFG als miteinander in Konflikt stehend gekennzeichnet. Hierzu werden die Antennen A11-A14, A21-A24, A31-A34 der RFID-Lesegeräte R1-R3 an der graphischen Benutzerschnittstelle der Steuerungs- und Überwachungseinheit CFG gruppiert nach dem jeweiligen RFID-Lesegerät R1-R3 in einer Konflikt-Matrix M1 visualisiert. Dabei ist jeder Antenne A11-A14, A21-A24, A31-A34 jeweils eine Spalte und eine Zeile innerhalb der Konflikt-Matrix M1 zugeordnet. Die miteinander in Konflikt stehenden Antennen A13/A22, A14/A21, A23/A32, A24/A31 werden innerhalb der Konflikt-Matrix M1 graphisch hervorgehoben dargestellt, beispielsweise mit anderer Farbe oder Helligkeit oder mit zusätzlichen Symbolen zur Kennzeichnung von Überschneidungen.

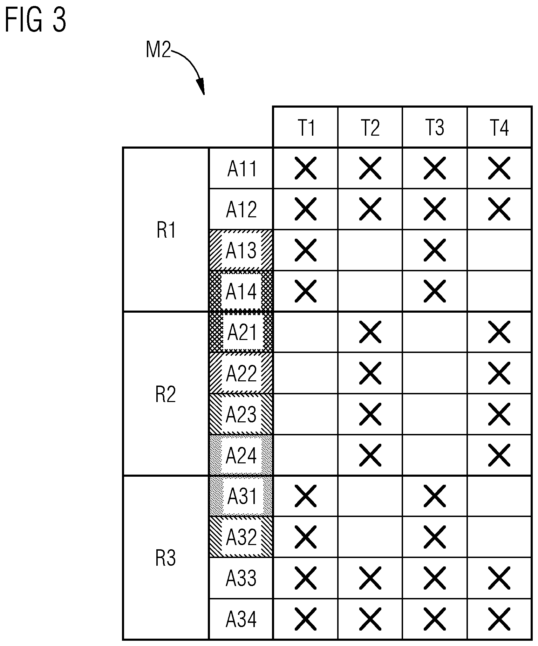

Für eine Nutzung jeder Antenne A11-A14, A21-A24, A31-A34 am jeweiligen RFID-Lesegerät R1-R3 zum Auslesen bzw. Beschreiben von RFID-Transpondern wird entsprechend Figur 3 jeweils zumindest ein sich zyklisch wiederholendes Zeitfenster T1-T4 reserviert, das der jeweiligen Antenne A11-A14, A21-A24, A31-A34 zugeordnet wird. Dabei werden die Zeitfenster T1-T4 mit Zeitinformationen, insbesondere NTP- oder PTP-Zeitstempel, innerhalb des Kommunikationsnetzes NET synchronisiert. Dies erfolgt vorzugsweise periodisch durch die RFID-Lesegeräte R1-R3, beispielsweise einmal innerhalb mehrerer Minuten oder Stunden. Im vorliegenden Ausführungsbeispiel werden die sich zyklisch wiederholenden Zeitfenster T1-T4 für die Antennen A11-A14, A21-A24, A31-A34 der RFID-Lesegeräte R1-R3 mittels der Steuerungs- und Überwachungseinheit CFG reserviert. Außerdem wird mittels der Steuerungs- und Überwachungseinheit CFG eine Zuordnung der miteinander in Konflikt stehenden Antennen A13/A22, A14/A21, A23/A32, A24/A31 zum selben Zeitfenster T1-T4 blockiert.

Die Zuordnung der sich zyklisch wiederholenden Zeitfenster T1-T4 zu den Antennen A11-A14, A21-A24, A31-A34 der RFID-Lesegeräte R1-R3 wird entsprechend Figur 3 an der graphischen Benutzerschnittstelle der Steuerungs- und Überwachungseinheit CFG gruppiert nach dem jeweiligen RFID-Lesegerät R1-R3 in einer Zeitfenster-Antennen-Matrix M2 visualisiert. Dabei ist im vorliegenden Ausführungsbeispiel jedem Zeitfenster T1-T4 jeweils eine Spalte innerhalb der Zeitfenster-Antennen-Matrix M2 zugeordnet, während jeder Antenne A11-A14, A21-A24, A31-A34 jeweils eine Zeile innerhalb der Zeitfenster-Antennen-Matrix M2 zugeordnet ist. Analog zu vorangehenden Ausführungen werden die miteinander in Konflikt stehenden Antennen A13/A22, A14/A21, A23/A32, A24/A31 innerhalb der Zeitfenster-Antennen-Matrix M2 graphisch hervorgehoben dargestellt. Alternativ zu dem in Figur 3 dargestellten Ausführungsbeispiel kann jedem Zeitfenster T1-T4 jeweils eine Zeile innerhalb der Zeitfenster-Antennen-Matrix M2 zugeordnet sein, während jeder Antenne A11-A14, A21-A24, A31-A34 jeweils eine Spalte innerhalb der Zeitfenster-Antennen-Matrix M2 zugeordnet sein kann.

Anhand der in Figur 3 dargestellten Zeitfenster-Antennen-Matrix M2 ist ersichtlich, dass den miteinander in Konflikt stehenden Antennen A13/A22, A14/A21, A23/A32, A24/A31 aufgrund vorangehend beschriebener Blockierung jeweils unterschiedliche Zeitfenstern T1-T4 zugeordnet werden. So sind der Antenne A13 die Zeitfenster T1 und T3 zugeordnet, während der Antenne A22 komplementär dazu die Zeitfenster T2 und T4 zugeordnet sind. In analoger Weise sind der Antenne A14 die Zeitfenster T1 und T3 zugeordnet, während der Antenne A21 komplementär dazu die Zeitfenster T2 und T4 zugeordnet sind. Darüber hinaus sind der Antenne A23 die Zeitfenster T2 und T4 zugeordnet, während der Antenne A32 komplementär dazu die Zeitfenster T1 und T3 zugeordnet sind. Dementsprechend sind der Antenne A24 die Zeitfenster T2 und T3 zugeordnet, während der Antenne A31 komplementär dazu die Zeitfenster T1 und T4 zugeordnet sind. Da die Antennen A11-A12, A33-A34 entsprechend Figur 2 keine Konflikte mit anderen Antennen aufweisen, können ihnen sämtliche Zeitfenster T1-T4 zugeordnet werden. Die in Figur 3 dargestellten Zuordnungen sind lediglich beispielhaft um die Konflikte entsprechend Figur 2 zu vermeiden. Daher sind zahlreiche andere Zuordnungen als in Figur 3 dargestellt möglich.

## Patentansprüche

1. Verfahren zum Betrieb mehrerer RFID-Lesegeräte, an die jeweils mehrere Antennen angeschlossen sind, bei dem
- die RFID-Lesegeräte (R1-R3) über ein Kommunikationsnetz (NET) zeitsynchronisiert werden,
- unterschiedlichen RFID-Lesegeräten und/oder demselben RFID-Lesegerät zugeordnete Antennen (A11-A14, A21-A24, A31-A34) ermittelt werden, deren Erfassungsbereiche sich zumindest teilweise überschneiden,
**dadurch gekennzeichnet, dass**
- die Antennen (A11-A14, A21-A24, A31-A34) mit den sich zumindest teilweise überschneidenden Erfassungsbereichen während eines Listen-Before-Talk-Betriebsmodus der Antennen und/oder der RFID-Lesegeräte (R1-R3) ermittelt werden,
- die ermittelten Antennen mit den sich zumindest teilweise überschneidenden Erfassungsbereichen an einer graphischen Benutzerschnittstelle einer über das Kommunikationsnetz mit den RFID-Lesegeräten verbundenen Steuerungs- und Überwachungseinheit (CFG) als miteinander in Konflikt stehend gekennzeichnet werden,
- für eine Nutzung jeder Antenne am jeweiligen RFID-Lesegerät zum Auslesen und/oder Beschreiben von RFID-Transpondern jeweils zumindest ein sich zyklisch wiederholendes Zeitfenster (T1-T4) reserviert wird, das der jeweiligen Antenne zugeordnet wird,
- die Zeitfenster mit Zeitinformationen innerhalb des Kommunikationsnetzes synchronisiert werden,
- eine Zuordnung der miteinander in Konflikt stehenden Antennen zum selben Zeitfenster blockiert wird.

2. Verfahren nach Anspruch 1,
bei dem eine teilweise Überschneidung der Erfassungsbereiche mehrerer Antennen (A11-A14, A21-A24, A31-A34) vorliegt, wenn Signale von unterschiedlichen Antennen an zumindest einer Position mit jeweils über einem vorgegebenen Empfangsfeldstärke-Schwellwert empfangen werden.

3. Verfahren nach einem der Ansprüche 1 oder 2,
bei dem die RFID-Lesegeräte (R1-R3) UHF-RFID-Lesegeräte sind.

4. Verfahren nach einem der Ansprüche 1 bis 3,
bei dem die Antennen (A11-A14, A21-A24, A31-A34) der RFID-Lesegeräte (R1-R3) an der graphischen Benutzerschnittstelle der Steuerungs- und Überwachungseinheit (CFG) gruppiert nach dem jeweiligen RFID-Lesegerät in einer Konflikt-Matrix (M1) visualisiert werden, wobei jeder Antenne jeweils eine Spalte und eine Zeile innerhalb der Konflikt-Matrix zugeordnet ist, und bei dem die miteinander in Konflikt stehenden Antennen innerhalb der Konflikt-Matrix graphisch hervorgehoben dargestellt werden.

5. Verfahren nach Anspruch 4,
bei dem die Zuordnung der sich zyklisch wiederholenden Zeitfenster (T1-T4) zu den Antennen (A11-A14, A21-A24, A31-A34) der RFID-Lesegeräte (R1-R3) an der graphischen Benutzerschnittstelle der Steuerungs- und Überwachungseinheit (CFG) gruppiert nach dem jeweiligen RFID-Lesegerät in einer Zeitfenster-Antennen-Matrix (M2) visualisiert wird, wobei jedem Zeitfenster jeweils eine Spalte oder Zeile innerhalb der Zeitfenster-Antennen-Matrix und jeder Antenne jeweils eine Zeile oder Spalte innerhalb der Zeitfenster-Antennen-Matrix zugeordnet ist, und bei dem die miteinander in Konflikt stehenden Antennen innerhalb der Zeitfenster-Antennen-Matrix graphisch hervorgehoben dargestellt werden.

6. Verfahren nach einem der Ansprüche 1 bis 5,
bei dem die sich zyklisch wiederholenden Zeitfenster (T1-T4) für die Antennen (A11-A14, A21-A24, A31-A34) der RFID-Lesegeräte (R1-R3) mittels der Steuerungs- und Überwachungseinheit (CFG) reserviert werden.

7. Verfahren nach einem der Ansprüche 1 bis 6,
bei dem mittels der Steuerungs- und Überwachungseinheit (CFG) ein Konfigurationstool für die RFID-Lesegeräte (R1-R3) bereitgestellt wird.

8. Verfahren nach einem der Ansprüche 1 bis 7,
bei dem im Kommunikationsnetz (NET) ein Zeitmultiplexverfahren, insbesondere Time Division Multiple Access, angewendet wird und dem die RFID-Lesegeräte (R1-R3) jeweils ein Kommunikationsmodul umfassen, das durch einen im Kommunikationsnetz bereitgestellten Zeitsynchronisations-Server (NTP), insbesondere entsprechend Network Time Protocol oder Precision Time Protocol, synchronisiert wird.

9. Steuerungs- und Überwachungseinheit für RFID-Lesegeräte zur Durchführung eines Verfahrens nach einem der Ansprüche 1 bis 8, wobei die Steuerungs- und Überwachungseinheit eine graphische Benutzerschnittstelle umfasst und dafür eingerichtet ist,
- unterschiedlichen RFID-Lesegeräten (R1-R3) und/oder demselben RFID-Lesegerät zugeordnete Antennen (A11-A14, A21-A24, A31-A34) zu ermitteln, deren Erfassungsbereiche sich zumindest teilweise überschneiden, wobei die Antennen (A11-A14, A21-A24, A31-A34) mit den sich zumindest teilweise überschneidenden Erfassungsbereichen während eines Listen-Before-Talk-Betriebsmodus der Antennen und/oder der RFID-Lesegeräte (R1-R3) ermittelt werden,
- die ermittelten Antennen mit den sich zumindest teilweise überschneidenden Erfassungsbereichen an der graphischen Benutzerschnittstelle als miteinander in Konflikt stehend zu kennzeichnen,
- für eine Nutzung jeder Antenne am jeweiligen RFID-Lesegerät zum Auslesen und/oder Beschreiben von RFID-Transpondern jeweils zumindest ein sich zyklisch wiederholendes Zeitfenster (T1-T3) zu reservieren und der jeweiligen Antenne zuzuordnen,
- eine Zuordnung der miteinander in Konflikt stehenden Antennen zum selben Zeitfenster zu blockieren.

## Claims

1. Method for operating a plurality of RFID readers, to which a plurality of antennas is connected in each case, in which
- the RFID readers (R1-R3) are time-synchronised by way of a communication network (NET),
- antennas (A11-A14, A21-A24, A31-A34) assigned to different RFID readers and/or the same RFID reader are determined, the detection regions of which overlap at least partially,
**characterised in that**
- the antennas (A11-A14, A21-A24, A31-A34) with the at least partially overlapping detection regions are determined during a Listen Before Talk operating mode of the antennas and/or the RFID readers (R1-R3),
- the determined antennas with the at least partially overlapping detection regions are identified on a graphical user interface of a control and monitoring unit (CFG) connected to the RFID readers by way of the communication network as in conflict with one another,
- for use of each antenna on the respective RFID reader for reading out and/or describing RFID transponders, at least one cyclically repeating time frame (T1-T4), which is assigned to the respective antenna, is reserved in each case,
- the time frames are synchronised with time information within the communication network,
- an assignment of the antennas which are in conflict with one another is blocked at the same time frame.

2. Method according to claim 1,
in which a partial overlap of the detection regions of a plurality of antennas (A11-A14, A21-A24, A31-A34) exists, if signals from different antennas are received at at least one position with in each case by way of a predetermined receiving field intensity threshold value.

3. Method according to one of claims 1 or 2,
in which the RFID readers (R1-R3) are UHF-RFID readers.

4. Method according to one of claims 1 to 3,
in which the antennas (A11-A14, A21-A24, A31-A34) of the RFID readers (R1-R3) are visualised on the graphical user interface of the control and monitoring unit (CFG) in a grouped manner according to the respective RFID reader in a conflict matrix (M1), wherein each antenna is assigned in each case a column and a row within the conflict matrix, and in which the antennas which are in conflict with one another are shown graphically highlighted within the conflict matrix.

5. Method according to claim 4,
in which the assignment of the cyclically repeating time frame (T1-T4) with respect to the antennas (A11-A14, A21-A24, A31-A34) of the RFID readers (R1-R3) is visualised on the graphical user interface of the control and monitoring unit (CFG) in a grouped manner according to the respective RFID reader in a time frame antenna matrix (M2), wherein a column or row within the time frame antenna matrix is assigned to each time frame in each case and a row or column within the time frame antenna matrix is assigned to each antenna in each case, and in which the antennas which are in conflict with one another are shown graphically highlighted within the time frame antenna matrix.

6. Method according to one of claims 1 to 5,
in which the cyclically repeating time frames (T1-T4) for the antennas (A11-A14, A21-A24, A31-A34) of the RFID readers (R1-R3) are reserved by means of the control and monitoring unit (CFG).

7. Method according to one of claims 1 to 6,
in which a configuration tool for the RFID readers (R1-R3) is provided by means of the control and monitoring unit (CFG).

8. Method according to one of claims 1 to 7,
in which, in the communication network (NET), a time multiplex method, in particular time division multiple access, is applied, and the RFID readers (R1-R3) comprise a communication module in each case, which is synchronised by a time synchronisation server (NTP) provided in the communication network, in particular corresponding network time protocol or precision time protocol.

9. Control and monitoring unit for RFID readers for carrying out a method according to one of claims 1 to 8, wherein the control and monitoring unit comprises a graphical user interface and is designed,
- to determine antennas (A11-A14, A21-A24, A31-A34) assigned to different RFID readers (R1-R3) and/or the same RFID reader, the detection regions of which at least partially overlap, wherein the antennas (A11-A14, A21-A24, A31-A34) with the at least partially overlapping detection regions are determined during a Listen Before Talk operating mode of the antennas and/or the RFID readers (R1-R3),
- to identify the determined antennas with the at least partially overlapping detection regions on the graphical user interface as in conflict with one another,
- to reserve at least one cyclically repeating time frame (T1-T3) and assign the same to the respective antenna for use of each antenna on the respective RFID reader to read out and/or describe RFID transponders in each case,
- to block an assignment of the antennas which are in conflict with one another at the same time frame.

## Revendications

1. Procédé pour faire fonctionner plusieurs appareils de lecture RFID, auxquels sont raccordés respectivement plusieurs antennes, dans lequel
- on synchronise temporellement les appareils (R1-R3) de lecture RFID par un réseau (NET) de communication,
- on détermine des appareils de lecture RFID différents et/ou des antennes (A11-A14, A21-A24, A31-A34), affectées au même appareil de lecture RFID, dont des domaines de couverture se recoupent au moins en partie,
**caractérisé en ce que** l'
- on détermine, pendant un mode de fonctionnement listen-before-talk des antennes et/ou des appareils (R1-R3) de lecture RFID, des antennes (A11-A14, A21-A24, A31-A34) ayant les domaines de couverture se recoupant au moins en partie,
- on caractérise, comme étant en conflit entre elles, les antennes déterminées, ayant les domaines de couverture se recoupant au moins en partie, sur une interface graphique d'utilisateur d'une unité (CFG) de commande et de contrôle reliée par le réseau de communication aux appareils de lecture RFID,
- pour une utilisation de chaque antenne par l'appareil de lecture RFID respectif pour la lecture et/ou l'écriture de transpondeurs RFID, on réserve respectivement au moins un créneau (T1-T4) temporel, se répétant cycliquement, qui est affecté à l'antenne respective,
- on synchronise les créneaux temporels avec des informations de temps dans le réseau de communication,
- on bloque une affectation au même créneau temporel des antennes en conflit entre elles.

2. Procédé suivant la revendication 1,
dans lequel il y a un recouvrement partiel des domaines de couverture de plusieurs antennes (A11-A14, A21-A24, A31-A34), si l'on reçoit, au-delà respectivement d'une valeur de seuil d'intensité de réception donnée à l'avance, des signaux d'antennes différentes en au moins une position.

3. Procédé suivant l'une des revendications 1 ou 2,
dans lequel les appareils (R1-R3) de lecture RFID sont des appareils de lecture RFID UHF.

4. Procédé suivant l'une des revendications 1 à 3,
dans lequel on visualise dans une matrice (M1) de conflit, les antennes (A11-A14, A21-A24, A31-A34) des appareils (R1-R3) de lecture RFID sur l'interface graphique d'utilisateur de l'unité (CFG) de commande et de contrôle, regroupées suivant l'appareil de lecture RFID respectif, dans lequel, à chaque antenne est affectée respectivement une colonne et une ligne dans la matrice de conflit, et dans lequel on représente, en les faisant ressortir graphiquement dans la matrice de conflit, les antennes en conflit entre elles.

5. Procédé suivant la revendication 4,
dans lequel on visualise, sur l'interface graphique d'utilisateur de l'unité (CFG) de commande et de contrôle, dans une matrice (M2) créneau temporel-antennes regroupée, suivant l'appareil de lecture RFID respectif, l'affectation des créneaux (T1-T4) temporels, se répétant cycliquement, aux antennes (A11-A14, A21-A24, A31-A34) des appareils (R1-R3) de lecture RFID, dans lequel, à chaque créneau temporel, est affecté respectivement une colonne ou une ligne de la matrice créneau temporel-antenne et à chaque antenne, respectivement une ligne ou une colonne de la matrice créneau temporel-antennes, et dans lequel on représente les antennes en conflit entre elles, en les faisant ressortir graphiquement dans la matrice créneau temporel-antennes.

6. Procédé suivant l'une des revendications 1 à 5,
dans lequel on réserve, au moyen de l'unité (CFG) de commande et de contrôle, les créneaux (T1-T4) temporels, se répétant cycliquement, pour les antennes (A11-A14, A21-A24, A31-A34) des appareils (R1-R3) de lecture RFID.

7. Procédé suivant l'une des revendications 1 à 6,
dans lequel on met à disposition, au moyen de l'unité (CFG) de commande et de contrôle, un outil de configuration des appareils (R1-R3) de lecture RFID.

8. Procédé suivant l'une des revendications 1 à 7,
dans lequel on applique dans le réseau (NET) de communication un procédé de multiplexage temporel, en particulier time division multiple access, et les appareils (R1-R3) de lecture RFID comprennent chacun un module de communication, que l'on synchronise par un serveur (NTP) de synchronisation temporelle mis à disposition dans le réseau de communication, en particulier conformément à network time protocol ou à précision time protocol.

9. Unité de contrôle et de commande d'appareils de lecture RFID pour effectuer un procédé suivant l'une des revendications 1 à 8, dans laquelle l'unité de commande et de contrôle comprend une interface graphique d'utilisateur, et est agencée pour
- déterminer des appareils (R1-R3) de lecture RFID différents et/ou des antennes (A11-A14, A21-A24, A31-A34), affectées au même appareil de lecture RFID, dont des domaines de couverture se recoupent au moins en partie, dans lequel on détermine, pendant un mode de fonctionnement listen-before-talk des antennes et/ou des appareils (R1-R3) de lecture RFID, des antennes (A11-A14, A21-A24, A31-A34) ayant les domaines de couverture se recoupant au moins en partie,
- caractériser, comme étant en conflit entre elles, les antennes déterminées ayant, sur l'interface graphique d'utilisateur, des domaines de couverture se recoupant au moins en partie,
- pour réserver, pour une utilisation de chaque antenne par l'appareil de lecture RFID respectif pour la lecture et/ou l'écriture de transpondeurs RFID, respectivement au moins un créneau (T1-T3) temporel, se répétant cycliquement, qui est affecté à l'antenne respective,
- pour bloquer une affectation au même créneau temporel des antennes en conflit entre elles.
